# EUROPÄISCHE PATENTANMELDUNG

(11) **EP 1 397 954 A1**
(43) Veröffentlichungstag der Anmeldung: **17.03.2004**
(21) Anmeldenummer: 03019128.2
(22) Anmeldetag: 23.08.2003
(51) Int. Cl.: A01F 15/08, A01D 41/127, G07C 5/08

(54) **Landwirtschaftliche Maschine**

(30) Priorität: 13.09.2002 DE 10242426
(71) Anmelder: Usines Claas France, 57140 St. Remy/Woippy (FR)
(72) Erfinder: Hawlas, Martin, 33428 Harsewinkel (DE)

(57) **Zusammenfassung**

Eine Landwirtschaftliche Maschine (1) ist mit wenigstens einem Sensor (20) zum Erfassen eines Betriebsparameters der Maschine und einer Sprachausgabeeinrichtung (21, 23) ausgestattet, die anhand eines von dem Sensor (20) erfassten Werts des Betriebsparameters eine Sprachnachricht festlegt und hörbar macht. Durch die Sprachnachricht kann einem Benutzer der Maschine eine Anweisung gegeben werden, wie auf den erfassten Wert des Betriebsparameters zu reagieren ist.

## Beschreibung

Die vorliegende Erfindung betrifft eine landwirtschaftliche Maschine, in der wenigstens ein Betriebsparameter der Maschine mit Hilfe eines Sensors erfasst wird.

Komplexe landwirtschaftliche Maschinen wie z.B. selbstfahrende Erntemaschinen weisen im Allgemeinen eine Vielzahl solcher Sensoren auf, deren Erfassungsergebnisse an einem Führerstand der Maschine angezeigt werden. Um die Vielzahl derartiger Parameter gleichzeitig zu überwachen, jederzeit korrekt auf sie zu reagieren und gleichzeitig die Maschine zu lenken, ist von Seiten des Maschinenführers ein erhebliches Maß an Übung erforderlich.

Als Beispiele für solche Maschinen können die aus DE 41 40 483 C2 bekannte Strohballenpresse oder die aus DE 101 00 521 A1 bekannte, als Mähdrescher ausgeführte Erntemaschine genannt werden.

Bei der bekannten Ballenpresse ist ein Sensor vorgesehen, um eine Rechts-Links-Ungleichverteilung von Stroh in der Presskammer zu erfassen und einem Führer der Ballenpresse anzuzeigen. Dieser kann dann auf das Signal reagieren, in dem er die Position der Ballenpresse in Bezug auf einen überfahrenen Schwad so korrigiert, dass vom Schwad aufgenommenes Stroh bevorzugt auf die weniger stark befüllte Seite der Presskammer gelangt. Der Führer der Ballenpresse lenkt gleichzeitig einen Traktor, an den die Ballenpresse angekoppelt ist. Er muss daher seine Aufmerksamkeit ständig gleichzeitig dem Lenken des Traktors und der Ladungsanzeige der Ballenpresse widmen.

Bei der aus DE 101 00 521 A1 bekannten Erntemaschine gehören zu den Betriebsparametern der Maschine, die ein Fahrer neben dem Lenken der Maschine ständig überwachen soll, die Betriebsgeräusche, die von verschiedenen Teilen der Maschine erzeugt werden. Um dem Fahrer eine genaue Verfolgung der Betriebsgeräusche zu ermöglichen, sind an diversen Stellen der Maschine Mikrofone angebracht, und die von ihnen aufgenommenen Geräusche werden durch eine Schallwiedergabeeinrichtung wie etwa einem Lautsprecher in der Kabine der Erntemaschine hörbar gemacht. Es liegt auf der Hand, dass ein Maschinenführer mit der Maschine in hohem Maße vertraut sein muss, um anhand der wiedergegebenen Geräusche Betriebsstörungen erkennen und ggf. geeignete Gegenmaßnahmen treffen zu können. Außerdem kann der Maschinenführer auch nur anhand derjenigen Geräusche eventuelle Betriebsstörungen erkennen, die tatsächlich in der Kabine wiedergegeben werden. Zwar ist es denkbar, von mehreren der Mikrofone aufgenommene Geräusche gleichzeitig wiederzugeben, doch ist es für den Maschinenführer um so schwieriger, anhand einer Veränderung der Geräusche eine Störung zu erkennen, je größer die Zahl der sich überlagernden Geräuschquellen ist.

Aufgabe der vorliegenden Erfindung ist, eine landwirtschaftliche Maschine anzugeben, die es auch einem ungeübten Maschinenführer erleichtert, auf Änderungen von Betriebsparametern schnell und richtig zu reagieren.

Die Aufgabe wird gelöst durch eine Maschine mit den Merkmalen des Anspruchs 1. Mit Hilfe der Sprachausgabeeinrichtung ist es möglich, den Maschinenführer über Betriebsparameter und deren Änderungen jederzeit informiert zu halten, ohne dass dieser hierfür optische Anzeigeelemente im Blick behalten muss.
Insbesondere bei einer beweglichen Maschine kann der Führer so seine Aufmerksamkeit weitgehend ungeteilt dem Lenken der Maschine widmen.

Eine weitere Erleichterung für den Maschinenführer kann dadurch erreicht werden, dass die Sprachnachricht nicht lediglich einen erfassten Wert des von dem Sensor erbrachten Betriebsparameters angibt, sondern eine Anweisung an den Maschinenführer beinhaltet, die er ausführen kann, um den von dem Sensor überwachten Bereich in einen Sollbereich zu bringen. Eine solche Maßnahme kann z.B. das Einstellen eines Steuerparameters in der Maschine wie etwa Bewegungsrichtung und/oder -geschwindigkeit, Übersetzungsverhältnis eines Getriebes etc., die Bereitstellung von Betriebsmitteln, ein Hinweis auf eine notwendige Wartung oder die Schaffung sonstiger Betriebsvoraussetzungen betreffen.

Bei dem von der Sensiereinrichtung überwachten Betriebsparameter kann es sich insbesondere um ein Maß für die Arbeitsleistung der Maschine, im Falle einer Erntemaschine insbesondere um ein Maß für die pro Zeiteinheit aufgenommene Menge an Erntegut handeln. Insbesondere in letzterem Falle bietet es sich an, dass die von der Sprachausgabeeinrichtung ausgegebene Sprachnachricht eine Anweisung betreffend die Fahrgeschwindigkeit beinhaltet, die den Fahrer z.B. anweist, die Fahrgeschwindigkeit zu reduzieren, wenn die Menge an aufgenommenem Erntegut pro Zeiteinheit nahe an der oberen Grenze dessen liegt, was die Maschine zu verarbeiten im Stande ist und eine weitere Steigerung der Aufnahmegeschwindigkeit zu technischen Problemen führen könnte, oder die Fahrgeschwindigkeit zu steigern, wenn die aufgenommene Menge an Erntegut deutlich unterhalb der Verarbeitungskapazität der Maschine liegt.

Vorzugsweise ist die Sprachausgabeeinrichtung mit einem Speicher für eine Mehrzahl von Sprachnachrichten ausgestattet, unter denen sie in Abhängigkeit vom von der Sensiereinrichtung erfassten Betriebsparameter die jeweils hörbar zu machende festlegt.

Die diversen Sprachnachrichten können in dem Speicher in Form von Audiosignalen abgelegt sein, d.h. in Form von Signalen, deren Werte unmittelbar proportional zu den von der Schallwiedereingabeeinrichtung erzeugten Schalldrücken sind oder von solchen Schalldruckwerten durch Digitalisierung und Datenkompression abgeleitet sind und eine Wiederherstellung des Schallsignals durch Dekompression und Analogisierung erlauben.

Alternativ können die Sprachnachrichten auch in Form von Zeichenketten abgelegt sein, deren Zeichen jeweils Buchstaben dieser Nachricht in Schriftform entsprechen. In einem solchen Fall ist die Sprachausgabeeinrichtung zweckmäßigerweise mit einer Sprachsyntheseschaltung zum Umwandeln der Zeichenketten in Audiosignale ausgestattet.

Zweckmäßig ist auch, mehrere Sätze von Sprachnachrichten in unterschiedlichen Sprachen in dem Speicher vorzusehen, zwischen denen umgeschaltet werden kann, so dass die Schallwiedergabeeinrichtung die Sprachnachrichten jeweils in einer vom Benutzer der Maschine verstandenen Sprache ausgibt.

Beim Einsatz der Maschine auftretende Nebengeräusche können die Verständlichkeit der Sprachnachrichten beeinträchtigen. Daher ist vorzugsweise zusätzlich eine optische Anzeigevorrichtung vorgesehen, die zusätzlich zur Ausgabe in akustischer Form eine Anzeige der festgelegten Sprachnachricht auch in optischer (Text)-Form ermöglicht.

Eine bevorzugte Ausgestaltung der erfindungsgemäßen Maschine ist eine Ballenpresse, bei der der wenigstens eine Sensor zur Erfassung der Verteilung von Erntegut in einer Presskammer der Ballenpresse dient. Hier beinhaltet die Sprachnachricht vorzugsweise Anweisungen betreffend eine Fahrtrichtung der Maschine, mit der eine Vergleichmäßigung der Erntegutverteilung in der Presskammer erreichbar ist.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine schematische Darstellung eines erfindungsgemäß ausgestalteten Feldhäckslers; und
- Fig. 2: eine schematische Darstellung einer von einem Traktor angetriebenen Ballenpresse gemäß der Erfindung.

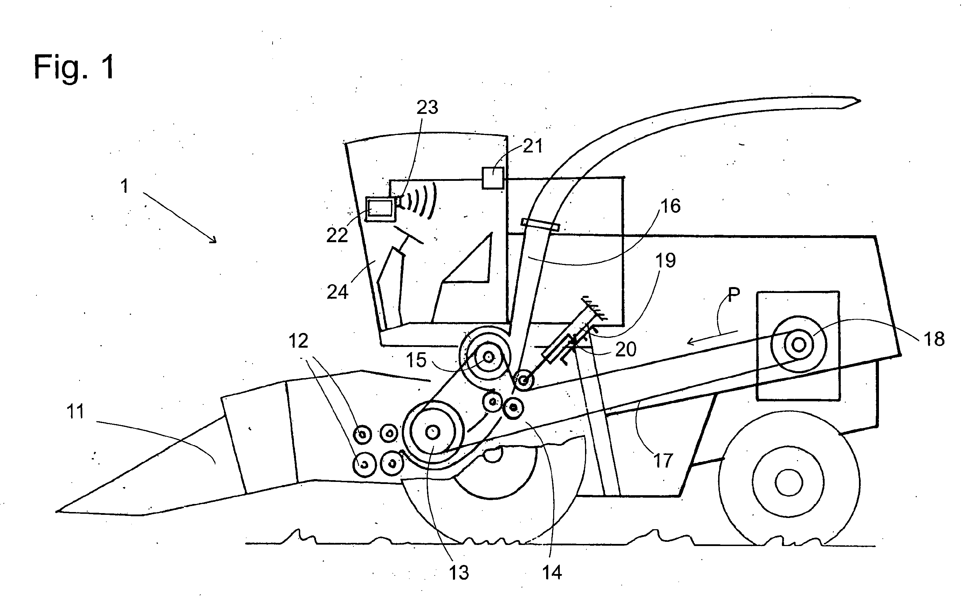

Die Frontpartie des in Fig. 1 schematisch gezeigten selbstfahrenden Feldhäckslers 1 bildet eine Vorrichtung zum Aufnehmen von Häckselgut wie hier z.B. ein Maisgebiss 11 oder, alternativ, ein rotierender Rechen zum Aufheben von lose am Boden liegendem Häckselgut wie etwa Stroh. Das aufgenommene Häckselgut wird über Einzugs- und Vorpresswalzen 12 einer Häckseltrommel 13 zugeführt, an deren rotierenden Messern es zerkleinert wird. Das zerkleinerte Häckselgut wird über Konditionierwalzen 14 einem. Nachbeschleuniger 15 zugeführt und über einen Auswurfkrümmer 16 ausgestoßen. Die Häckseltrommel 13 und andere rotierende Teile auf dem Förderweg des Häckselguts sind über einen Endlosriemen 17 von einem im Heck des Feldhäckslers 1 angeordneten Antriebsmotor 18 angetrieben. Die Umlaufrichtung des Endlosriemens ist durch einen Pfeil P bezeichnet. Der Endlosriemen 17 hat einen Abschnitt maximaler Spannung, in dem sich der Riemen 17 von der Häckseltrommel 13 zum Antriebsmotor 18 bewegt, und einen Abschnitt minimaler Spannung, in welchem er vom Antriebsmotor 18 zurück nach vorn verläuft. Ein Riemenspanner 19, z.B. in Form eines Hydraulikzylinders, hält eine Rolle gegen diesen Abschnitt minimaler Spannung gedrückt, um auch hier eine erforderliche Mindestspannung aufrecht zu erhalten. Ein Sensor 20 am Riemenspanner 19 erfasst die zum Aufrechterhalten dieser Mindestspannung erforderliche Auslenkung des Riemenspanners 19. Diese ist umso größer, je höher das zum Antreiben der Häckseltrommel 13 und der anderen rotierenden Teile erforderliche Antriebsmoment des Motors 18 ist.

Der Sensor 20 ist an eine Auswertungselektronik 21 gekoppelt. An die Auswertungselektronik 21 sind eine optische Anzeigeeinrichtung 22 zum Anzeigen der vom Sensor 20 gemessenen Auslenkung sowie ein Lautsprecher 23 gekoppelt, die in der Fahrerkanzel 24 des Feldhäckslers 1 angebracht sind. In einem Speicher der Auswertungselektronik 21 ist eine Mehrzahl von Sprachnachrichten in digitalisierter Form abgelegt, die über den Lautsprecher 23 wiedergegeben werden können.

Diese digitalisierten Sprachnachrichten können z.B. erhalten sein durch Aufzeichnen und Digitalisieren von von einem Menschen gesprochenen Texten. Bei den digitalisierten Werten kann es sich unmittelbar um eine zeitliche Folge von dem gesprochenen Text entsprechenden Schalldruckwerten handeln; es kann sich auch um aus einer solchen Zeitreihe durch Datenkompression erhaltene Daten in einem aus der Computeroder Nachrichtentechnik bekannten Aufzeichnungsformat wie etwa WAV oder MP3 handeln.

Eine dieser Sprachnachrichten beinhaltet die Anweisung an den Fahrer des Feldhäckslers 1, die Fahrgeschwindigkeit zurückzunehmen. Diese Nachricht wird von der Auswertungselektronik 21 ausgegeben, wenn der vom Sensor 20 gelieferte Messwert eine starke Auslenkung des Riemenspanners 19 entsprechend einer hohen Belastung des Riemens 17 bzw. des Häckselwerks anzeigt. Wenn der Fahrer der Anweisung folgt und die Fahrgeschwindigkeit des Häckslers 1 reduziert, verringert sich die Menge an pro Zeiteinheit aufgenommenem Erntegut, und die Belastung des Häckselwerks nimmt ab.

Eine andere in der Auswertungselektronik 21 gespeicherte Sprachnachricht beinhaltet die Anweisung, die Geschwindigkeit des Häckslers zu steigern; diese wird ausgegeben, wenn eine vom Sensor 20 erfasste geringe Auslenkung des Riemenspanners 19 auf eine geringe Belastung des Häckselwerks hinweist und die Menge an pro Zeiteinheit aufgenommenen Erntegut noch gesteigert werden könnte. So kann der Fahrer des Häckslers, ohne irgendwelche optischen Anzeigen beachten zu müssen, die Verarbeitungsleistung des Häckslers jederzeit effizient ausnutzen und eine abzuerntende Fläche in der kürzest möglichen Zeit bearbeiten.

Bei einer nicht eigens in einer Figur dargestellten Abwandlung dieses Ausführungsbeispiels sind die diversen Sprachnachrichten, die von der Auswertungselektronik 21 ausgegeben werden können, in einem Speicher in Form von Zeichenketten, z.B. im ASCII-Format, gespeichert, und die Auswertungselektronik ronik 21 verfügt über eine Sprachgeneratorschaltung, die dazu dient, jeweils eine dieser Zeichenketten in ein Audiosignal umzuwandeln, das von dem Lautsprecher 23 ausgegeben werden kann. Bei dieser Abwandlung kann die optische Anzeigeeinrichtung 22 zusätzlich dazu genutzt werden, die Zeichenkette, die einer über den Lautsprecher 23 wiedergegebenen Sprachnachricht entspricht, in Textform anzuzeigen. So kann der Fahrer des Feldhäckslers 1, wenn er aufgrund von Umgebungsgeräuschen die Sprachnachricht nicht sicher verstanden hat, deren Inhalt auf der Anzeigevorrichtung 22 nachprüfen.

Ein gleiches Ergebnis wäre auch erreichbar mit einer Spracherkennungsschaltung, die jeweils eine als Audiosignal gespeicherte wiederzugebende Sprachnachricht in Textform umwandelt und so deren Anzeige auf der Anzeigeeinrichtung 22 ermöglicht, oder durch gleichzeitiges Speichern der Sprachnachrichten als Audiosignal und als Zeichenkette im Speicher der Auswertungselektronik 21 und jeweils gleichzeitiges Ausgeben einer festgelegten Sprachnachricht als Audiosignal an den Lautsprecher 23 und als Zeichenkette an die Anzeigeeinrichtung 22.

Einer weiteren Abwandlung zufolge enthält der Speicher der Auswertungselektronik 21 mehrere Sätze der Sprachnachrichten in verschiedenen Sprachen, und die Auswertungselektronik 21 ist durch den Fahrer einstellbar, so dass sie auf den Satz von Sprachnachrichten in der vom Fahrer verstandenen Sprache zugreift.

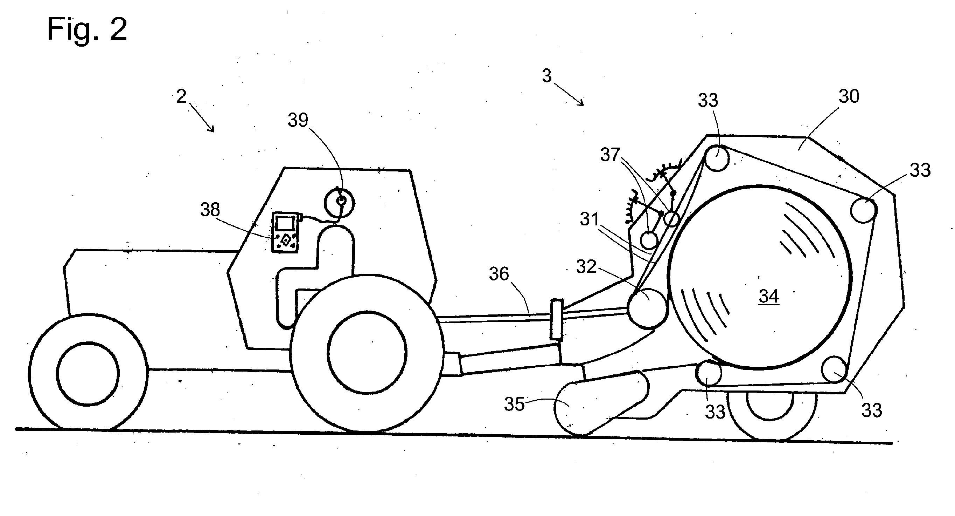

Ein zweites Ausführungsbeispiel der Erfindung in Fig. 2 zeigt schematisch eine von einem Traktor 2 gezogene und angetriebene Rundballenpresse 3. In einer Presskammer 30 der Rundballenpresse 3 laufen mehrere Pressriemen 31 parallel nebeneinander auf einer Antriebswalze 32 und mehreren angetriebenen Walzen 33 um und umschlingen einen Rundballen 34, der aus von einem Aufnehmer 35 vom Erdboden aufgenommenem und der Presskammer 30 zugeführtem Pressgut gebildet wird. Die Antriebswalze 32 und der Aufnehmer 35 sind über eine Zapfwelle 36 vom Traktor 2 angetrieben.

Die Breite der Presskammer 30 der üblichen Rundballenpressen ist im Allgemeinen größer als die Breite der Schwaden, in denen ausgedroschenes Stroh von einem Mähdrescher auf einem abgeernteten Feld ausgelegt wird. Wenn die Rundballenpresse 3 exakt geradeaus über einen solchen Schwad fahren würde, würde dessen geringe Breite dazu führen, dass das aufgesammelte Stroh sich nicht gleichmäßig über die Breite der Presskammer 30 verteilt. Kegel- oder Tonnenform der resultierenden Pressballen wäre die Folge. Um dies zu verhindern, sind an wenigstens zweien der Pressriemen 31, vorzugsweise jeweils den den Seitenwänden der Presskammer 30 benachbarten Pressriemen 31, Spannungssensoren 37 zum Erfassen der Zugspannung der Pressriemen 31 angeordnet. Diese Sensoren 37 liefern jeweils unterschiedliche Werte, wenn der entstehende Ballen Kegelform annimmt. Die Spannungssensoren 37 sind an eine Auswertungselektronik 38 gekoppelt, die wie die Auswertungselektronik 21 der Fig. 1 über einen Speicher für Sprachnachrichten verfügt und mit einer Schallwiedergabeeinrichtung zur Ausgabe dieser Sprachnachrichten verbunden ist. Da der Führerstand des Traktors 2 offen ist und Außengeräusche ungehindert eindringen können, handelt es sich hier bei der Schallwiedergabeeinrichtung vorzugsweise um einen Kopfhörer 39.

Wenn die Auswertungselektronik 38 feststellt, dass die vom linken Spannungssensor 37 erfasste Spannung um einen vorgegebenen Wert größer als die des rechten ist, so weist dies darauf hin, dass zuviel Pressgut von der linken Hälfte der Ballenpresse 3 aufgenommen wird und zu wenig von ihrer rechten Hälfte. Die Auswertungselektronik 38 gibt in diesem Fall auf den Kopfhörer 39 eine Sprachnachricht aus, die den Fahrer des Traktors 2 anweist, diesen geringfügig nach links zu lenken, so dass der Schwad bevorzugt von der rechten Hälfte der Ballenpresse 3 aufgenommen werden kann. Wenn anschließend die vom rechten Sensor gemessene Riemenspannung die des linken um den vorgegebenen Wert übersteigt, gibt die Auswertungselektronik 38 dem Fahrer die Anweisung, den Traktor 2 nach rechts zu lenken.

Die Auswertungselektronik 38 beschränkt sich darauf, dem Fahrer Anweisungen zu erteilen; sie greift niemals direkt in die Lenkung des Traktors 2 ein. Der Fahrer behält somit die vollständige Kontrolle über die Lenkung und kann Anweisungen der Auswertungselektronik 38 ignorieren, wenn sie unangemessen erscheinen oder ihre Ausführung gar eine Gefahr für die Sicherheit darstellen würde.

Auch bei dieser Ausgestaltung kann eine Anzeigeeinrichtung analog zur Anzeigeeinrichtung 22 aus Fig. 1 vorgesehen werden, die unterstützend zur Ausgabe der Sprachnachrichten die Ausgabe von entsprechenden Nachrichten in Textform ermöglicht.

Die oben für eine Rundballenpresse gelieferte Beschreibung ist ohne weiteres auch auf eine Quaderpresse übertragbar. Bei einer solchen Presse erfolgt die Verdichtung des Pressguts nicht mit Hilfe von Pressriemen, sondern mit Hilfe eines Presskolbens, der periodisch gegen in einer Presskammer gesammeltes Pressgut gedrückt wird, um dieses zu verdichten. Auch hier kann der beim Verdichten auf einen rechten bzw. linken Teil des Presskolbens wirkende Druck mit Hilfe von Sensoren erfasst werden, deren Signale in der beschriebenen Weise ausgewertet werden, um einem Fahrer Anweisungen zu geben. Es ist auch möglich, eine Ungleichverteilung des Pressguts mit Hilfe eines einzigen Sensors zu erfassen; diese Technik ist aus der bereits erwähnten DE 41 40 483 C2 bekannt und braucht hier nicht erneut beschrieben zu werden.

Selbstverständlich sind die obigen Beispiele nicht erschöpfend für die Anweisungsmöglichkeiten der Erfindung. So kann eine Auswertungselektronik der angegebenen Art auch an Sensoren zum Erfassen des Vorhandenseins oder Nichtvorhandenseins von Betriebsmitteln gekoppelt sein, im Falle einer Ballenpresse z.B. an Sensoren zum Erfassen eines Vorrats an Bindematerial wie etwa Garn oder Netz, und dem Fahrer eine Anweisung zum Ergänzen des Bindematerials geben, wenn dieses knapp wird oder verbraucht ist.

Zahlreiche weitere Anwendungen, die den Umgang mit einer komplexen Maschine erleichtern, sind denkbar. Wenn die Aktivierung einer Funktion einer Maschine an eine Sicherheitsbedingung geknüpft ist, z.B. wenn das Häckselwerk eines Feldhäckslers nur in Betrieb genommen werden darf, wenn eine Sicherheitsabdeckung geschlossen ist, so kann ein an die Auswertungselektronik gekoppelter Sensor zum Erfassen des Zustands offen oder geschlossen dieser Abdeckung vorgesehen werden und die Auswertungselektronik ausgelegt werden, um dem Benutzer eine Anweisung zum Schließen dieser Abdeckung zu geben, falls er bei geöffneter Abdeckung versucht, das Häckselwerk einzuschalten. Denkbar ist auch, Erfassungsergebnisse einer Vielzahl von Sensoren an eine Auswertungselektronik zusammenzuführen, die eingerichtet ist, anhand der Erfassungsergebnisse, fehlerhafte Betriebszustände der Maschine zu erkennen und in Art eines Expertensystems Vorschläge zur Behebung eines solchen Fehlerzustandes in Form einer Sprachnachricht an den Benutzer auszugeben.

## Patentansprüche

1. Landwirtschaftliche Maschine (1; 3) mit wenigstens einer Sensiereinrichtung (20; 37) zum Erfassen wenigstens eines Betriebsparameters der Maschine und wenigstens einer Schallwiedergabeeinrichtung (23; 39), **dadurch gekennzeichnet, dass** die Schallwiedergabeeinrichtung (23; 39) Teil einer Sprachausgabeeinrichtung (21, 23; 38, 39) zum Festlegen einer Sprachnachricht anhand eines von der Sensiereinrichtung (20; 37) erfassten Werts des wenigstens einem Betriebsparameters und zum Hörbarmachen der festgelegten Sprachnachricht ist.

2. Landwirtschaftliche Maschine nach Anspruch 1,
**dadurch gekennzeichnet, dass** die festgelegte Sprachnachricht eine Anweisung an einen Benutzer der Maschine (1; 3) ist, eine Maßnahme an der Maschine vorzunehmen.

3. Landwirtschaftliche Maschine nach Anspruch 2,
**dadurch gekennzeichnet, dass** die Maschine (1; 3) im Betrieb beweglich ist und dass die Sprachnachricht eine Anweisung betreffend die Bewegungsgeschwindigkeit oder die Bewegungsrichtung der Maschine beinhaltet.

4. Landwirtschaftliche Maschine nach einem der vorhergehenden Ansprüche, **dadurch gekennzeichnet, dass** die Sprachausgabeeinrichtung (21, 23; 38, 39) einen Speicher für eine Mehrzahl von Sprachnachrichten umfasst, und dass die Sprachausgabeeinrichtung (21, 23; 38, 39) die Festlegung einer Sprachnachricht unter den in dem Speicher abgelegten Sprachnachrichten trifft.

5. Landwirtschaftliche Maschine nach Anspruch 4,
**dadurch gekennzeichnet, dass** die Sprachnachrichten in dem Speicher in Form von Audiosignalen abgelegt sind.

6. Landwirtschaftliche Maschine nach Anspruch 4,
**dadurch gekennzeichnet, dass** die Sprachnachrichten in dem Speicher in Form von Zeichenketten abgelegt sind, und dass die Sprachausgabeeinrichtung eine Sprachsyntheseschaltung zum Umwandeln der Zeichenketten in Audiosignale umfasst.

7. Landwirtschaftliche Maschine nach einem der Ansprüche 4 bis 6, **dadurch gekennzeichnet, dass** in dem Speicher mehrere Sätze von Sprachnachrichten in unterschiedlichen Sprachen abgelegt sind.

8. Landwirtschaftliche Maschine nach einem der vorhergehenden Ansprüche, **dadurch gekennzeichnet, dass** sie ferner mit einer optischen Anzeigevorrichtung (22) zum Anzeigen der festgelegten Sprachnachricht in Textform ausgestattet ist.

9. Landwirtschaftliche Maschine nach einem der vorhergehenden Ansprüche, **dadurch gekennzeichnet, dass** der Betriebsparameter ein Maß für die Arbeitsleistung der Maschine ist.

10. Landwirtschaftliche Maschine nach Anspruch 9,
**dadurch gekennzeichnet, dass** sie eine Erntemaschine (1) ist und dass der Betriebsparameter ein Maß für die pro Zeiteinheit aufgenommene Menge an Erntegut ist.

11. Landwirtschaftliche Maschine nach einem der vorhergehenden Ansprüche, **dadurch gekennzeichnet, dass** die Maschine eine Ballenpresse(3) ist und dass die wenigstens eine Sensiereinrichtung (37) zur Erfassung der Verteilung von Erntegut in einer Presskammer der Ballenpresse dient.

12. Landwirtschaftliche Maschine nach Anspruch 11,
**dadurch gekennzeichnet, dass** die Sensiereinrichtung eine Ungleichverteilung einer auf einen in der Presskammer enthaltenen Ballen ausgeübten Presskraft über die Breite des Ballens erfasst.

13. Landwirtschaftliche Maschine nach Anspruch 11 oder 12, **dadurch gekennzeichnet, dass** die Presskammer eine Mehrzahl von Pressbändern (31) aufweist und dass die wenigstens eine Sensiereinrichtung (37) zur Erfassung der Verteilung des Ernteguts einen Spannungsunterschied zwischen den Pressbändern (31) erfasst.
